# EUROPEAN PATENT APPLICATION

(11) **EP 0 525 811 A1**
(43) Date of publication of application: **03.02.1993**
(21) Application number: 92113138.9
(22) Date of filing: 31.07.1992
(51) Int. Cl.: B60R 7/04, E05B 65/12

(54) **Vehicle console with inertial door lock**

(30) Priority: 02.08.1991 US 739748
(71) Applicant: UNITED TECHNOLOGIES AUTOMOTIVE, Inc., Dearborn Michigan 48126 (US)
(72) Inventor: Moriconi, Leonard E., Southfield City, Michigan 48076 (US); Krzyaniak, Daniel N., Livonia, Michigan 48154 (US)
(74) Representative: Klunker . Schmitt-Nilson . Hirsch

(57) **Abstract**

A console for a motor vehicle is provided with an inertial lock which prevents the console's door from opening under inertial forces associated with the door's own weight under conditions of rapid vehicle deceleration.

## Description

### Technical Field

This invention relates generally to consoles for motor vehicles, and specifically to consoles employing interial door locks.

### Background Art

As automotive design and technology evolve, more and more electronic accessories such as advanced audio systems, computers and the like find their way into modern automobile instrument panels. Accommodation for such accessories in the instrument panels leaves little extra room for storage therein. Today's sophisticated automobile purchaser demands interior storage which oftentimes cannot be fulfilled by the traditional instrument panel glove compartment. Thus, modern automotive interiors employ many diverse storage compartments such as bins in such areas as the instrument panel, interior door panels and the center console located between the driver and passenger seat.

Recently, automotive ceilings have been explored as locations for storage compartments (overhead consoles) which accommodate such objects as garage door opener remote controls, sun glasses and the like. For ease of opening and closing of the console doors, without necessitating the diversion of the drivers attention from the road, such doors are often provided with what are known as push-push latches. A console door provided with such a latch is opened by pushing in on the door (which is normally biased in an open direction) and closed by again pushing in on the door.

It will be appreciated that a console door which faces at least in part rearwardly, must be pushed at least in part in a forward direction for unlatching with a push-push type latch. It will be further appreciated that in emergency breaking situations wherein the vehicle decelerates rapidly, inertial forces associated with the door's own weight cause the door to move forwardly with respect to the console wall structure, thereby effecting a forward movement of the door relative to the door structure and thus, actuation of the latch, thereby causing the door to open. Clearly, such opening of a console door in an emergency breaking situation could result in the door striking an occupant of the vehicle or release of the contents of the console which could injure a vehicle occupant. Thus, a vehicle console with a door lock which is actuated by rapid vehicle deceleration in connection with the emergency breaking thereof, is desirable.

### Disclosure of Invention

In accordance with the present invention, a console for a motor vehicle having a wall structure and a door which opens by a force applied thereto in generally the same direction as inertial forces thereon in an emergency breaking situation, is provided with a lock which in response to such emergency breaking, locks the door to prevent unwanted opening thereof. The invention is particularly well suited for use in consoles such as overhead consoles having doors which face at least partially rearwardly and are unlatched by push-push type actuators. In the preferred embodiment, the lock comprises a pivotable stop mounted to a wall structure defining a storage compartment within the console and, with respect to such wall structure, pivots into a position which blocks forward movement of the door and therefor, undesirable opening thereof under conditions of rapid vehicle deceleration.

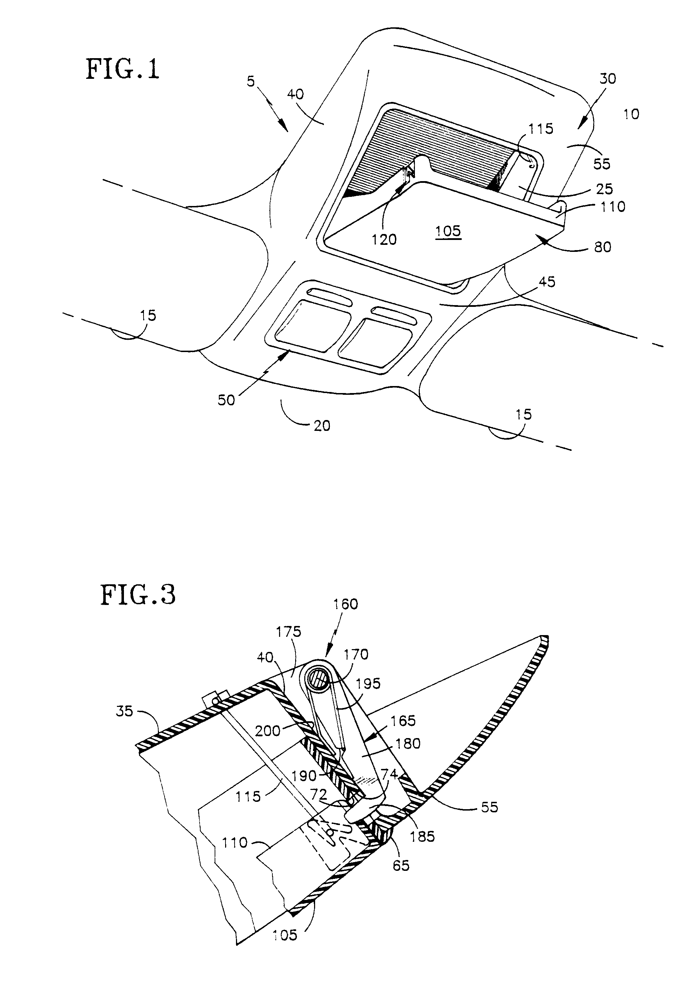

Description of the Drawing
Figure 1 is a perspective view of the overhead console of the present invention with the door thereof shown in an open position;
Figure 2 is a side elevation of the overhead console shown in Figure 1, portions thereof being sectioned to show details of construction, and the door thereof being shown in an open condition under normal operating conditions; and
Figure 3 is a side elevation similar to that of Figure 1 but showing the door of the console in a closed and locked condition.

### Best Mode for Carrying Out the Invention

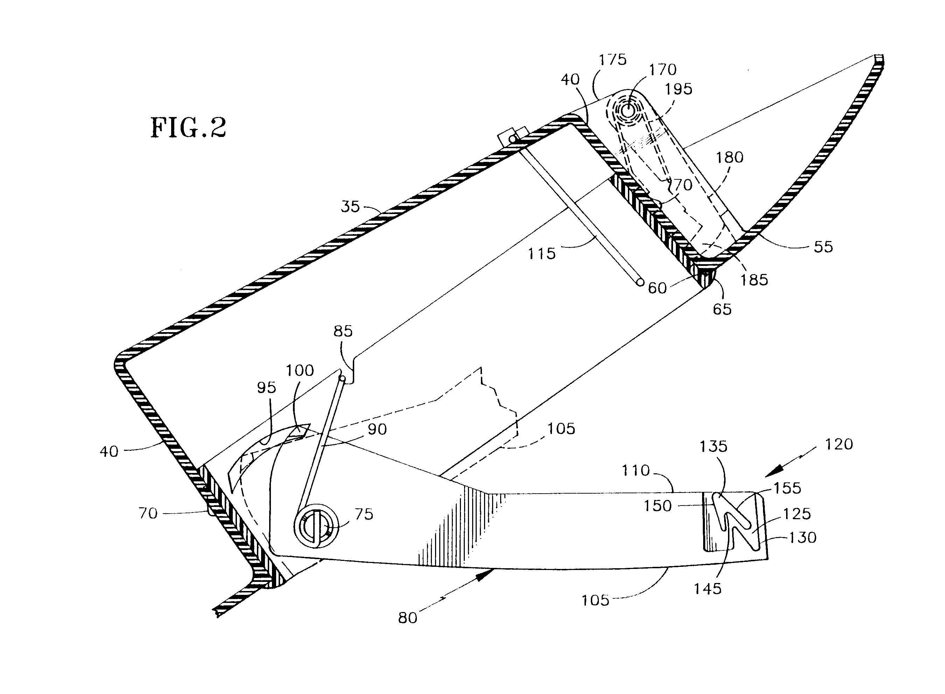

Referring to the drawing, console 5 of the present invention is shown at the forwardmost portion of an automobile ceiling (headliner) 10. For reference purpose, the vehicle's sun visors 15 are shown in phantom at the forward edge 20 of the vehicle's ceiling. The overhead console comprises a storage compartment 25 defined by a wall structure 30 which includes an upper wall 35 side walls 40 and a lower wall 45 in which a courtesy lamp module 50 may be mounted at the forward portion thereof. The rear portion of lower wall 45 includes a rearwardly and downwardly facing portion 55 having an opening 60 provided therein for access to storage compartment 25. The edges of the opening may be covered with a trim bezel 65, having resilient tabs 70 and aperture 72 formed therein, the bezel being for example, snap-fit in forward and rear sidewalls 40. Aperture 72 is aligned with a similar aperture 74 in rear sidewall 40. The bezel is also apertured (not shown) to receive a hinge pin 75 (Fig. 2) on which door 80 is pivotally mounted. A slot 85 in the upper edge of the bezel accommodates the end of wire spring 90 the other end of which is wrapped around pin 75. The wire spring may be employed to bias the door toward an open position (Fig. 2) or in the alternative, to damp the opening movement of the door under its own weight. The bezel may also be provided with a curved slot 95 which receives a guide pin 100 formed in the door to guide the door's pivotal movement and limit opening movement of the door.

Door 80 comprises a storage tray including a bottom wall 105, the periphery of which is maintained in registry with opening 60 when the door is closed in a manner to be more fully described hereinafter. A rim 110 extends upwardly from the bottom wall and provides a means for inhibiting the spillage of small objects from the tray (door) when opened. As best seen in Figure 2, the engagement of guidepin 100 with the end of slot 95 limits opening movement of the door to a generally horizontal position thereof to further inhibit spillage of loose articles therefrom when the door is opened.

The door is provided with any suitable latching means such as the push-push latch illustrated. This latch comprises a spring detent 115, self biased in a clockwise direction (as viewed in Figures 2 and 3) from its position of attachment against upper compartment wall 35. Door 80, at opposite locations on the sides of rim 110 is provided with a catch 120 (Fig. 2) comprising a slot 125 defined by a recess 130 and a raised, generally V-shaped cam 135 having a notch 145 and surfaces 150 and 155 therein.

Operation of the door is a follows. In the closed position of the door as shown in phantom in Figure 2, the free end of wire detent 115 is received within notch 145 in cam 135. When the door is pressed slightly upwardly and forwardly, the end of detent 115 is freed from notch 145 and pivots slightly clockwise under its internal spring force, thereby allowing the door to pivot downwardly to an open position as the end of detent 115 slides along surface 150. To close the door, the door is merely again pushed upwardly and forwardly to its closed position, the end of detent 115 sliding along cam surface 155 which pivots the detent slightly counterclockwise until the detent reaches the end of cam surface 150 at which point it pivots slightly clockwise under its own internal spring force to snap the end thereof into notch 145, thereby latching the door in a closed position.

To prevent the opening of door 80 by inertial forces associated with the door's own weight under conditions of rapid deceleration, the console is provided with an inertial lock 160 (Figs. 2 and 3). Lock 160 includes a pivotable stop (pendulum) 165 mounted on pin 170 which is in turn mounted to flange 175 extending integrally from the real sidewall 40. For stability, flange 175 may comprise one of a pair of parallel flanges forming a clevis to which pin 170 is mounted.

Pivotable stop 165 comprises a generally downwardly extending leg 180 with a generally forwardly directed foot 185 at the lower end of the leg. The stop is notched at 190, the notch receiving the end of a wire spring 195 the opposite end of which bears against the outer surface of rear sidewall 40. Spring 195 biases stop 165 rearwardly out of registry (at foot 185) with apertures 72 and 74 in rear sidewall 40 and bezel 65 under normal conditions. Thus, under such normal conditions, pivotable stop 165 does not interfere with the normal operation of door 105 and push-push latch 120. However, under conditions of rapid vehicle deceleration associated with, for example, emergency breaking thereof, pivotable stop 165 swings forwardly with respect to the wall structure of the console due to inertial forces thereon. This causes foot 185 to swing through openings 72 and 74 in rear sidewall 40 and bezel 65 into the interior of storage compartment 25 as shown in Fig. 3. Door 80 which would otherwise tend to open under such conditions due to inertial forces applied to the push-push actuator, instead engages the end of foot 185 at the rearward most end of door rim 110 preventing inward movement of the door sufficient to release the door by means of the push-push door.

From the foregoing, it will be appreciated that the inertial lock employed in the vehicle console of the present invention safely locks the console door under conditions of rapid vehicle deceleration associated with emergency breaking. The lock is simple, yet effective and capable of being economically mass produced.

While the particular embodiment of the console of the present invention has been shown and described, it will understood that various modifications thereof may suggest themselves to those skilled in the art. For example, while a specific console configuration adapted for the storage of any of various small articles has been shown, the inertial lock of the present invention is employable with any overhead console such as various overhead consoles employed for the storage of specific objects such as sun glasses, transmitters for garage door openers and the like. Furthermore, while a specific push-push latch structure and hinge means have been shown, various other equivalent latches and hinges may be employed. It is intended by the following claims to cover all such modifications as fall within the true spirit and scope of this invention.

## Claims

1. A console for a motor vehicle, said console including a wall structure defining a compartment and a door for closing said compartment;
said console being provided with a latch engageable by said door for maintaining said door in a closed position and allowing said door to be opened by a force thereon applied by an occupant of said vehicle in substantially the same direction as forces associated with said rapid forward deceleration of said motor vehicle;
said console being further provided with a lock, said lock, in response to said rapid forward vehicle deceleration, locking said door in said closed condition to prevent forces applied to said latch in connection with said rapid vehicle deceleration from releasing said latch and thereby causing said door to open.

2. The console of Claim 1 characterized by:
said door facing rearwardly with respect to said motor vehicle and opening, under normal circumstances, by forward movement in response to the application of a forwardly directed force thereon,
said lock comprising a pivotable stop, which, in response to inertial forces resulting from said rapid deceleration, pivots with respect to said door, into a position which blocks forward movement of said door and therefore, undesirable opening thereof.

3. The console of Claim 2 characterized by said stop being mounted to said wall structure of said compartment.

4. The console of Claim 3 characterized by said stop being mounted to a rear wall of said compartment, said rear wall having an opening therein, said door having a projection thereon extending from an inner surface thereof, said projection engaging said stop though said opening under said conditions of rapid vehicle deceleration.

5. The overhead console of any one of claims 2 to 4 characterized by said stop being biased in a direction away from registry with said opening under normal conditions.
